# NEW EUROPEAN PATENT SPECIFICATION

(11) **EP 0 455 309 B2**
(45) Date of publication and mention of the opposition decision: **15.12.1999**
(45) Mention of the grant of the patent: 23.03.1994
(21) Application number: 91201065.9
(22) Date of filing: 03.05.1991
(51) Int. Cl.: E01C 23/12, E02F 7/06, B07B 1/22, B07B 1/24, A01D 17/14, A01F 25/20

(54) **Scooping apparatus, vehicle and coupling plate therefore**
Schaufeleinheit, Fahrzeug und Verbindungsplatte zwischen den beiden
Pelleteuse, véhicule et sa plaque de connexion

(30) Priority: 04.05.1990 NL 9001080
(43) Date of publication of application: 06.11.1991
(73) Proprietor: Van Dalfsen, Rudolf Hendrik, NL-8281 BL Genemuiden (NL)
(72) Inventor: Van Dalfsen, Rudolf Hendrik, NL-8281 BL Genemuiden (NL)
(74) Representative: Schumann, Bernard Herman Johan

(56) References cited:
- EP-A- 0 047 041
- EP-A- 0 106 412
- NL-A- 8 200 449
- US-A- 1 974 717
- US-A- 4 005 755
- US-A- 4 065 062

## Description

The invention relates to a scooping apparatus to be coupled with a vehicle, said apparatus comprising:
a carrying frame to be coupled with said vehicle by means of coupling means,
a substantially cylindrical cage rotatably carried by said frame, said cage comprising:
   two end walls rotatably connected with said frame by means of rotation bearings,
   two cage parts carried by said end walls, namely a scooping part having a scooping edge, and a lid part, said two cage parts being relatively movable between an closed position, in which they form the cage, and in such a way that that cage part is permeable to a substantial degree,
   first driving means for rotatably driving at least one of said cage parts;
   and second driving means for moving the cage parts between the closed position and the open position,
   the rotation axis of the lid part relative to the scooping part extending on a radial distance from the rotation axis of the cage amounting from zero to two-third of the radius of the cage,
   in which said second driving means comprising first locking means for locking the lid part in at least one angular position relative to the frame for moving the cage between the closed position and the open position by said first driving means.

It is noted that from two brochures of the firm Van Dalfsen Rotar-Equipment B.V. entitled "rotar-cleaner" a scooping apparatus is known bearing resemblance with the scooping apparatus according to prior art US-A-1 974 717 and EP-A-0 106 412. The brochures are not dated and the typical features of the apparatus shown and described therein are in no way relevant to the present invention.

In order to be able to rotate the cage in its closed position as a result of which the cage can be operative for cleaning scooped material, mixing different materials and the like, according to the invention use is made of second locking means for locking the two cage parts against relative rotation in the closed position, according to the features of claim 1.

Minimum space in the open position of the cage is achieved by an embodiment which is characterized in that the two cage parts are movable in coaxial relation with the cylinder axis of the cage.

A very simple embodiment is characterized in that the second locking means comprise:
a sloping cam arranged at the one cage part and a spring loaded pall present at the other cage part and cooperating with said sloping cam.

Furthermore the invention relates to an embodiment which is characterized by auxiliary means arranged in the cage. In this connection it should be understood that a user of a scooping apparatus wishes to utilize that apparatus for as many purposes as possible, different from only scooping elements lying on the ground, such as bricks and the like.

Thus, e.g. the auxiliary means may comprise a snow shovel. Such a snow shovel is known in itself. The owner of a scooping apparatus according to the invention can in the open position of the cage, particularly a position in which the cage has an practically full opening at the lower side, now fix the auxiliary means in this cage.

In an alternative embodiment this apparatus is characterized in that the auxiliary means comprise a brush rotatably drivable by means of third driving means.

In an other embodiment the apparatus is characterized in that the auxiliary means comprise a shaft carrying extensions, such as blades or knives.

In order to ensure a ready replacement of the extensions that embodiment is preferred in which the extensions are removable.

For e.g. grinding scooped hard soil, particularly dry day soil, it can be advantageous, if the extensions are hingeably connected to said shaft.

In a certain embodiment the apparatus is characterized in that the shaft is rotatably drivable by means of fourth driving means.

In order to load the said fourth driving means as homogeneously as possible preferably use is made of an embodiment in which the extensions are arranged on said shaft in a helical pattern.

In a practical embodiment the apparatus is characterized in that the second, the third and/or the fourth driving means comprise a hydromotor which is fed from a hydraulic power source present in the vehide through a hydraulic rotation coupling arranged in the area of one of the rotation bearings.

For sieving out finer substances and retaining more coarse matter, e.g. removing sand from scooped gravel, the apparatus may be characterized in that the auxiliary means comprise a sieve plate fixed to a cage part provided with openings and covering said openings, said at least one sieve plate having openings which are smaller than the openings in the relates cage part.

A mixer is obtained with an apparatus according to the invention, which is characterized in that the auxiliary means comprise a closed plate fixed to a cage part provided with openings and covering said openings.

It should be noted that the apparatus according to the invention performs a double function. On the one hand it can always have the function of a scooping apparatus, comparable with a bulldozer, whilst on the other hand it can also serve as a deaning apparatus for e.g. paving bricks, which bricks then during transportation can be deaned by rotation of the cage and deposited elsewhere. Also particularly with a fully closed cage, the apparatus may serve as a mixer. An important example of such an application is the cleaning of polluted soil. To this soil present in the scooping part of the apparatus a powder is added that can treat the soil in such a way that it looses its noxiousness in a considerable degree, e.g. dries, hardens or the like. During the transportation of the polluted soil mixed with this active powder towards a dumping place the intimate mixing of the soil with the powder can take place by rotating the apparatus. After this mixing has taken place during transport, if necessary, the e.g. rust proof steel closed plates of the cage parts may be removed and the replaced by the sieve plates. If desired, during further transport or on the dumping location subsequently the necessary separations may take place of finer and more coarse components in connection with the related choice of the desired dumping location.

It will be obvious that the sieve plates and/or the closed plates can be connected with the cage parts, e.g. by means of bolts.

Also the invention relates to vehide which is characterized by a scooping apparatus according to the specifications given hereinabove.

Furthermore an embodiment of the invention relates to a coupling plate which is specially adapted to be used as a coupling means between such a vehide and an apparatus according to the invention. There exists a so-called "quick exchange system", by means of which an apparatus of the present type may be adjusted for use on the one mark vehide or the other mark vehicle. The disadvantage of the prior art systems is, that the hydraulic couplings thereto have to be temporarily interrupted. This is accompanied by a premature where of particulary the related shaft parts in the area of the rotation bearings. Therefore it is desired to design this coupling in such a way, that it is very readily adapted for different marks and furthermore allows in this way a very simple adjustment from pushing operation to pulling operation.

The coupling plate according to the invention is adapted thereto and allows a rotation over 180° of the cage. Thus the scooping apparatus remains intact, without the necessity of decoupling the rotation shafts. This highly contributes to the long lifetime of the scooping apparatus.

The invention will now be elucidated with reference to the annexed drawing, wherein:
Fig. 1 shows a perspective view of a device according to the invention;
Fig. 2 shows the detail II from fig. 1;
Fig. 3 shows on enlarged scale a perspective view, obliquely from the front side of the device according to fig. 1 and partially broken away;
Fig. 4 shows the section IV-IV according to fig. 3;
Fig. 5 shows the section V-V according to fig. 3;
Fig. 6 shows the detail VI-VI according to fig. 3 on enlarged scale;
Fig. 7 shows the detail VII-VII according to fig. 3 on enlarged scale;

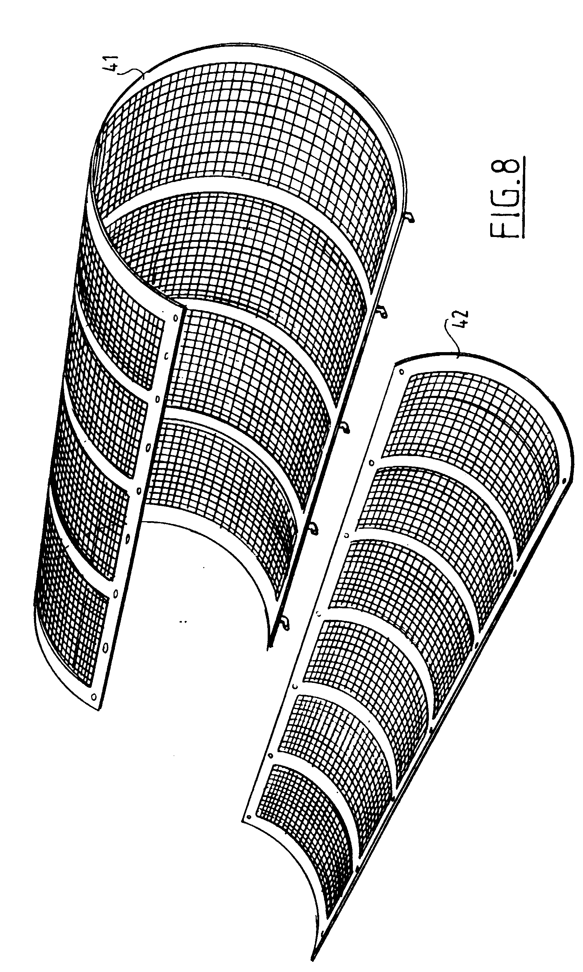

Fig. 8 shows in perspective view two sieve plates for receiving in a drum;
Fig. 9a, 9b, 9c and 9d show schematically four phases of a process for coupling the device to the other side of a scoop;
Fig. 10 is a partially broken away perspective view of a device according to the invention capable of mixing and cutting;
Fig. 11 is a cross section through the device of fig. 10;
Fig. 12 shows a cross section through a rotor with a hollow shaft with perforations for injecting water and with brushing means;
Fig. 13, 14 and 15 show schematically a number of possible applications of the device according to the invention;
Fig. 16 is a schematic perspective view of a device according to the invention which bears a brush and a snow plough; and
Fig. 17 and fig. 18 show respective side elevation views of embodiments of cages in two different positions.

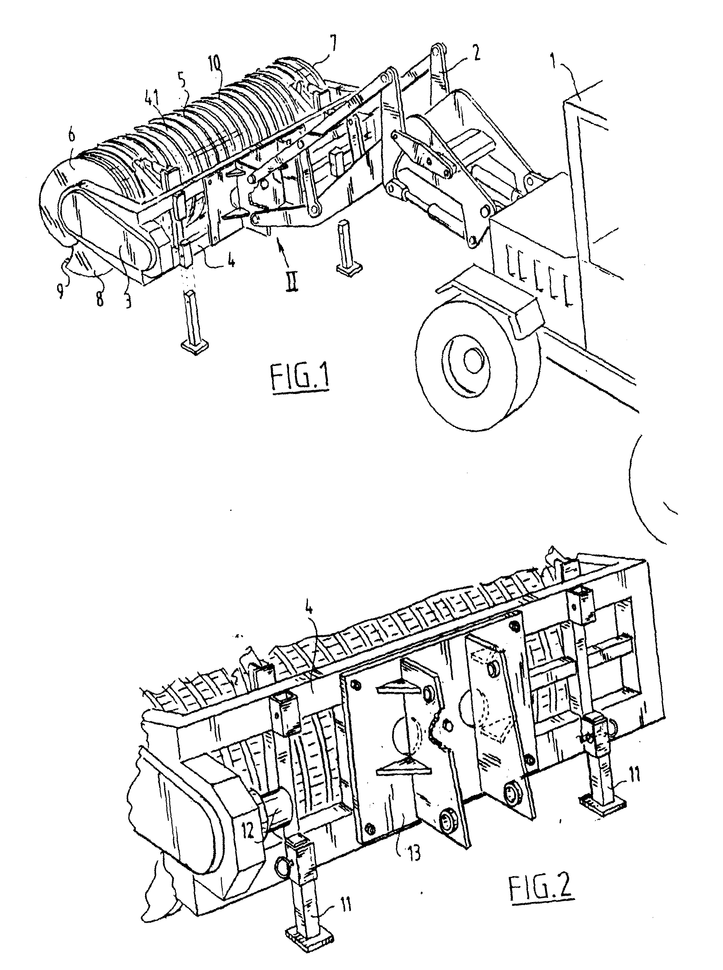

Fig. 1 shows a vehide 1 which carries a pick-up device 3 by means of a bearing frame 2.

This pick-up device comprises a frame 4 and, supported rotatably by that frame 4, a substantially cylindrical cage 5, which itself comprises: two end walls 6, 7 rotatably connected to the frame 4 via rotation bearings to be described hereafter, and, supported by these end walls 6, 7, two cage parts, namely a scoop part 8 with a scooping edge 9 and a flap part 10, which two cage parts are mutually movable between a closed position, in which they form the cage, and an open position.

The two cage parts are movable coaxially with the cylinder axis of the cage 5.

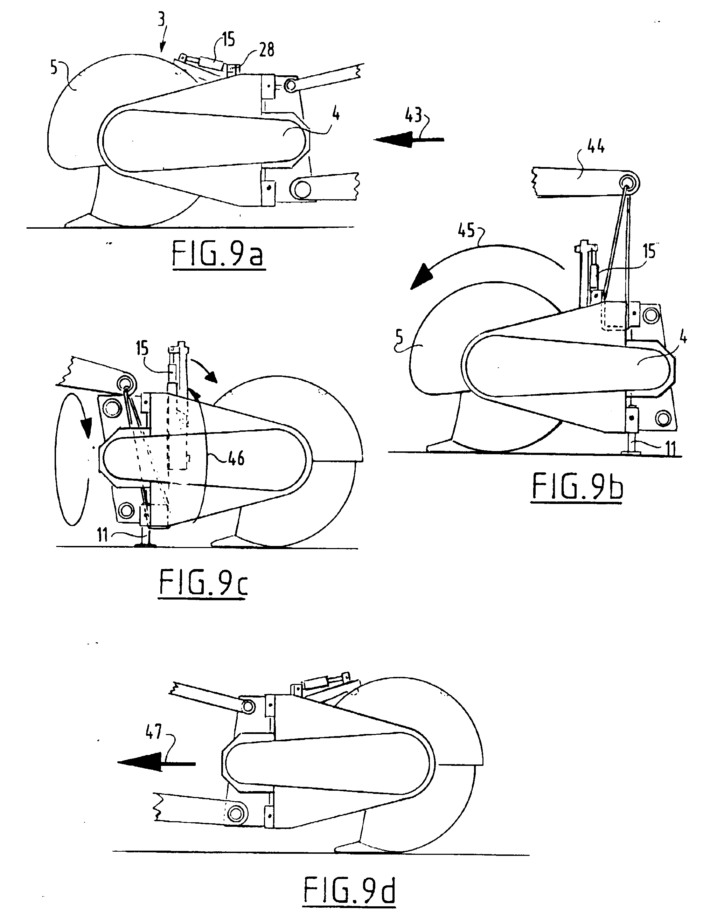

Fig. 2 shows on enlarged scale the frame 4 which, for reasons to be described further, can support temporarily on the ground by means of legs 11. The frame bears a hydraulic drive motor 12, which can drive the cage 5 in rotation via a chain (not drawn). The frame 4 is supported by the bearing frame 2 by means of a coupling plate 13 which is embodied such that it can also mutually couple the said frames in the reversed position. This aspect of the invention will be further elucidated with reference to fig. 9.

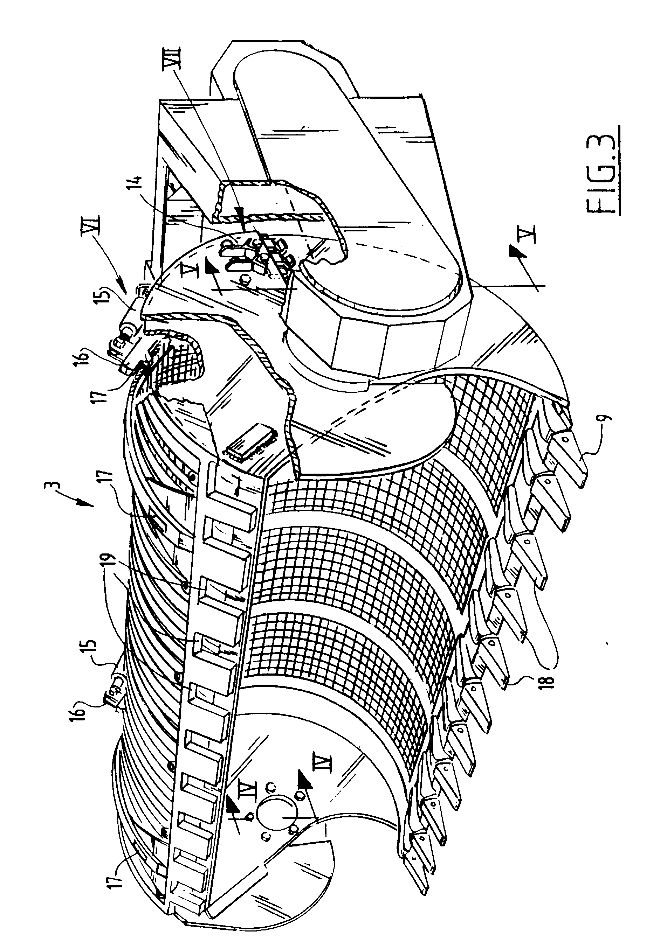

Fig. 3 shows the device 3 in more detail. The coupling between the scoop part 8 and the flap part 10 for joint rotation takes place by means of a ratchet construction generally designated in this figure with 14.

Hydraulic cylinders 15 are coupled to ratchets 16 which can engage in a recess 17 in the flap part 10. The flap part can thus be locked in a desired angular position relative to the frame.

The scooping edge 9 comprises teeth 18 which in the closed situation of the cage 5 are received in recesses 19 in the corresponding edge of the flap part 10.

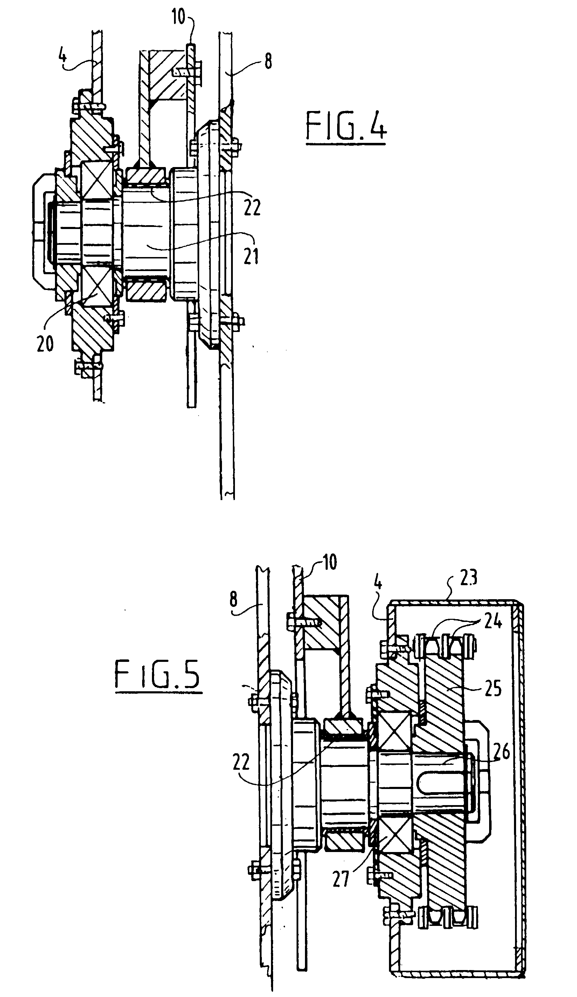

Fig. 4 shows the detail IV of fig. 3 on enlarged scale. The frame 4 supports a bearing 20 which carries the scoop part 8 via a shaft 21. The shaft 21 supports the flap part 10 via a slide bearing 22.

Fig. 5 shows the detail V from fig. 3 on a larger scale. A chain casing 23 forms part of the frame 4. This accommodates the aforesaid drive chain 24, which runs over a drive gear 25 for driving thereof by the hydro-motor 12. The chain gear 25 drives a drive shaft 26 which is supported by the frame 4 via a bearing 27. The construction is otherwise the same as that according to fig. 4.

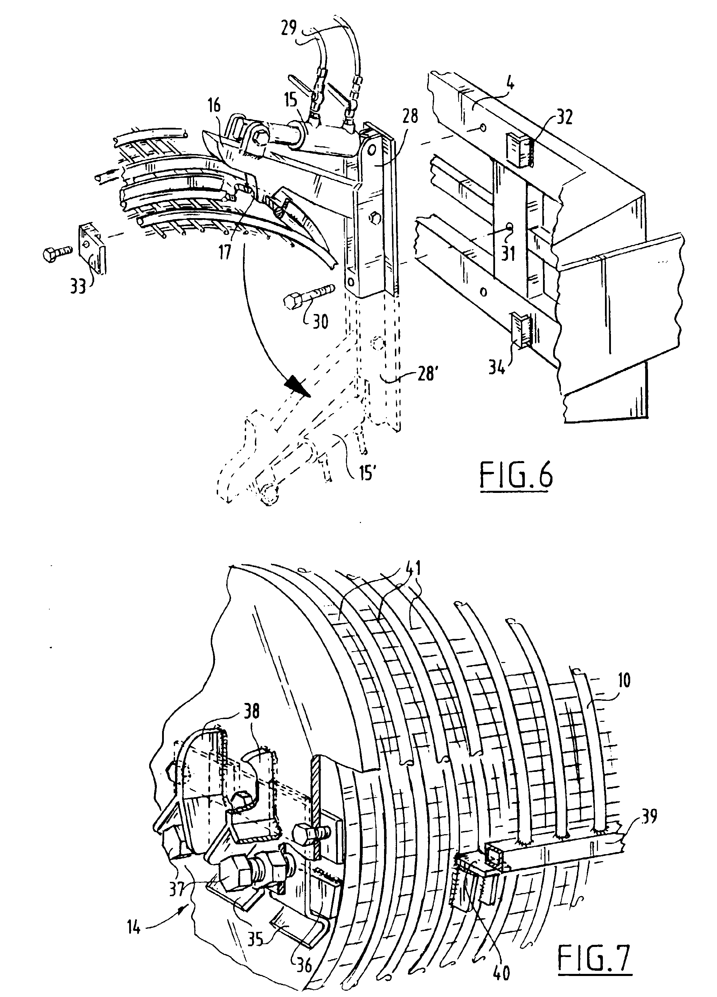

Fig. 6 shows the method of fixing a hydraulic cylinder 15 to the frame 4. The cylinder 15 is carried pivotably by a support 28 which can be coupled to the frame 4 by means of screws. The hydraulic cylinder 15 is also pivotably coupled to the ratchet 16. By energizing the cylinder 15 via hydraulic lines 29 the ratchet can at choice be in or out of engagement with the recess 17. The support 28 can be coupled to the frame 4 in a central threaded hole 31 using a bolt 30. By means of an L-profile 32 and a corresponding fastening element 33 the support 28 is held in its desired position.

Because, as will be further explained with reference to fig. 9, the cage can be coupled to the frame 4 in two mutually opposite positions a corresponding reversal of the support 28 is necessary. As is shown in fig. 6 with broken lines, the frame can also be turned through 180°, whereby it arrives at the position indicated with 28', wherein it is held in place by the bolt 30 and a second L-profile 34. This revolution is also the reason for the presence of two recesses 17 in the cage 5. These recesses are placed symmetrically relative to the vertical and correspond in engagement with respectively the pushing position and pulling position of the cage 5 to be described hereinbelow.

Fig. 7 shows the ratchet construction 14 which serves for mutually locking the scoop part 8 and the flap part 10 against rotation. Two spring-loaded ratchets 35 in the form of pre-formed steel strips co-act with a ridge 36. Through mutual relative rotation of the two cage parts 8, 10 the ratchets 35 can pass over the ridge 36, whereby coupling is effected. By driving the scoop part 8 the flap part 10 is carried along. In order to be certain under all circumstances that the correct force is transmitted for this purpose by the ratchet construction 14, adjusting bolts 37 are present with which the resilience of the ratchets 35 can be controlled. To prevent dirtying of the ratchet construction 14 as far as possible during operation, Y-shaped protectors 38 are arranged.

The flap part 10 can rest in its end position with beam 39 on a shoulder 40 on the scoop part 8.

The cage construction of the cage 5 is completely open and comprises arcuate bars. In order to now be able to use the cage as sieving device with a smaller mesh width, the scoop part can be covered on the inside with a sieve plate 41, while the flap part is provided on the inside with a sieve plate 42. The sieve plate 41 can be attached by pushing hooks and by means of bolts; the sieve plate 42 is attached only by means of bolts.

Fig. 9a shows the device according to the invention in operation. The vehide is situated in this case on the right-hand side, and the action of the combination is "pushing", as the arrow 43 indicates. In order to also exert a "pulling" action the frame 4 is lifted over the cage 5 by means of a hoist 44 according to the arrow 45, so that the frame 4 comes to stand in the position indicated in fig. 9c, respectively supported by the legs 11 on the one side and on the other side. In the meantime the hydraulic cylinder with accessories (see fig. 6) is carried to the position turned through 180°, as indicated by the arrow 46, whereafter, following rotation through 180° of the coupling plate 13, coupling with the vehide takes place again and the configuration shown in fig. 9d is obtained, whereby the vehicle can serve to pull the device 3 according to the invention as indicated by the arrow 47. Decoupling and recoupling of the hydraulic lines for the hydraulic cylinders 15 is not described.

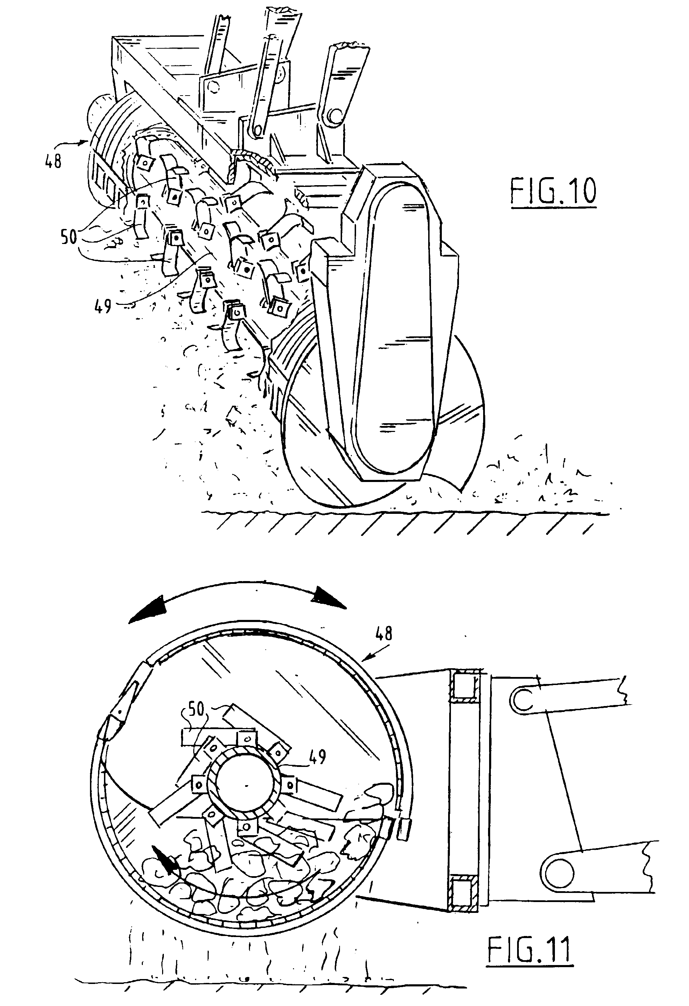

Fig. 10 shows a device according to the invention which can operate as pick-up, chopper and sieving device. The device 48 comprises for this purpose a shaft 49, on which a number of protrusions 50 are pivotally attached.

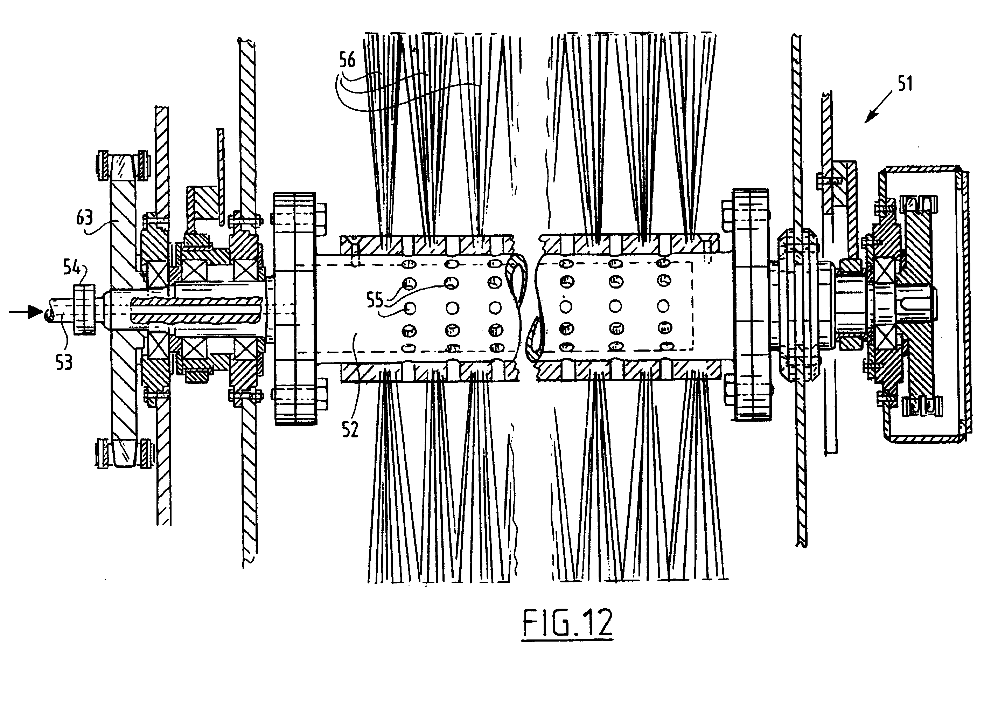

Fig. 11 shows in cross section the phase in which the device 48 is operating as chopper.

Fig. 12 shows a device 51 with a central shaft 52 which takes a hollow form and which can guide liquid from outside via an axial inlet 53 and a rotation coupling 54 to perforations 55 in the shaft wall, through which for instance washing water can be used to clean harvested products during rotation of the closed cage 5. To this end the shaft 52 carries brushes 56.

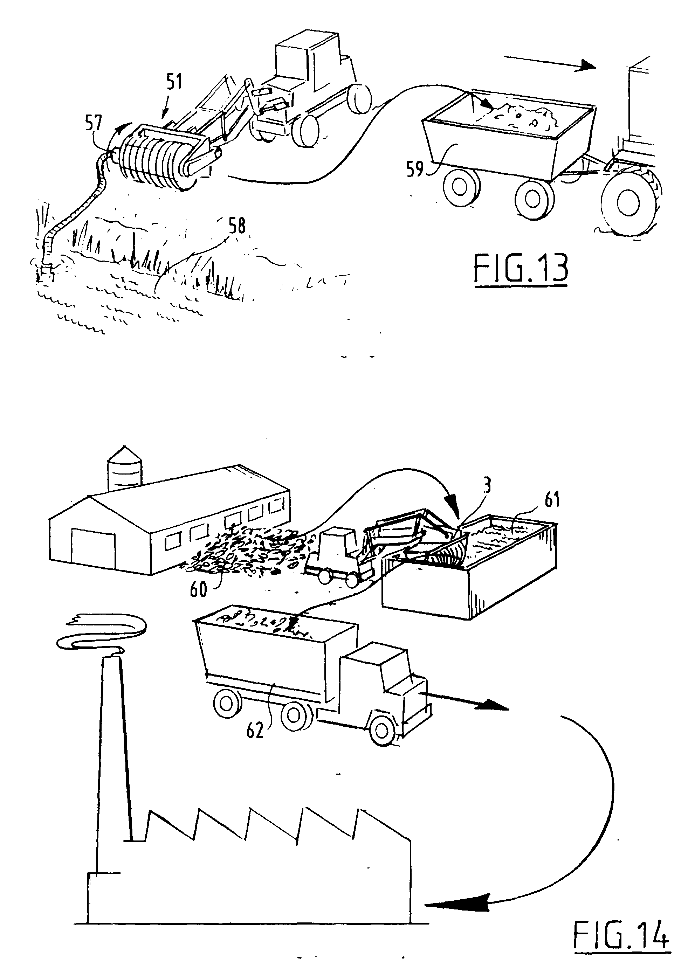

Fig. 13 shows the manner in which the device 51 can be used with water which is supplied by means of a pump 57 from a water channel 58. The cleaned products are then loaded into a transport container 59.

Fig. 14 shows use of the device 3, wherein harvest products 60 are picked up, carried in the dosed cage, immersed in a water pool 61 and cleaned therein by rotation of the dosed cage, whereafter the cleaned products are deposited in a truck 62.

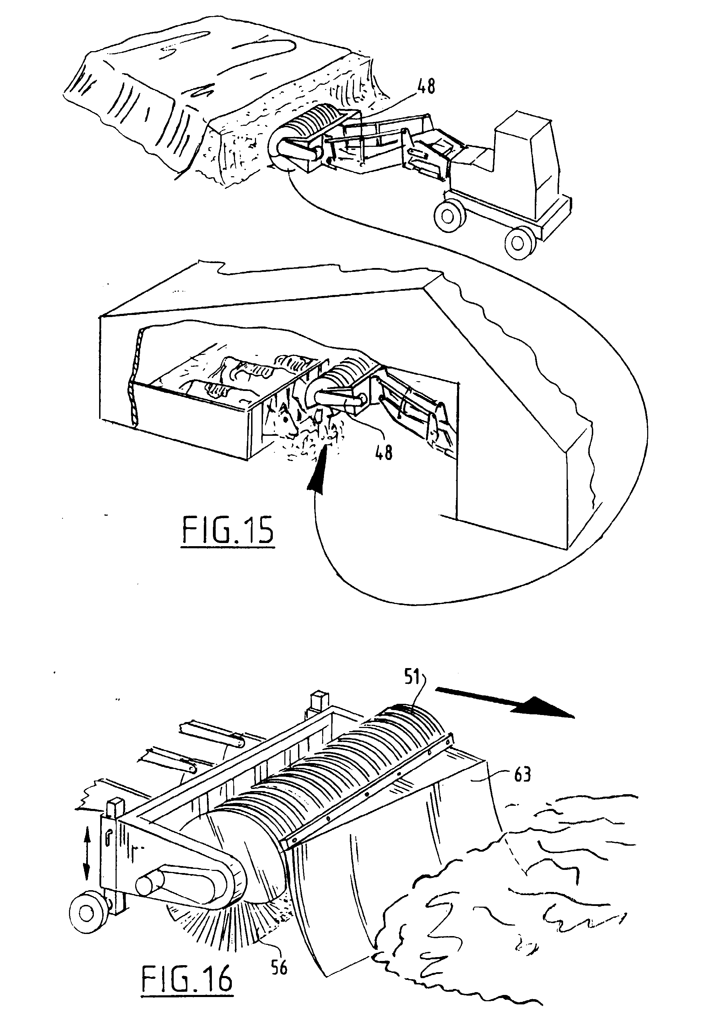

Fig. 15 shows application of the device 48 as silage remover, chopper and distributor.

Fig. 16 finally shows the device 51, which is used with addition of a snow plough 63. The brush 56 is, as in the embodiment of fig. 12, driven separately via a drive wheel. In this case the hydro-motor 12 is not energized and only the brush is driven.

The pressure forces occurring during scooping are transferred from edge 9 to frame 4 by means of cooperating stoppers 39, 40.

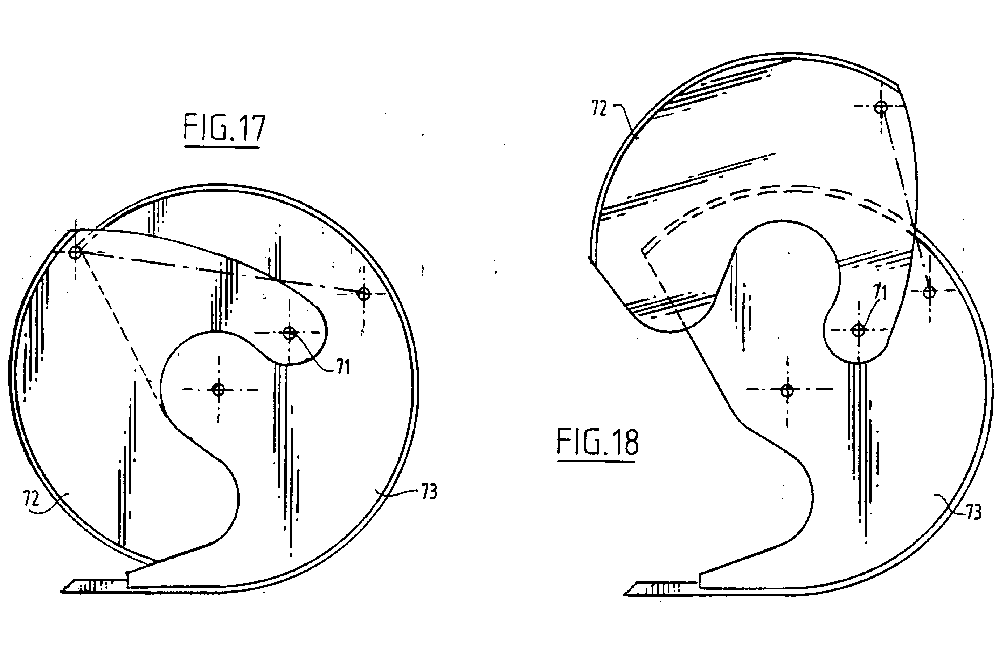

Figs. 17 and 18 show side elevation views of an alternative embodiment of a cage, in which the rotation axis 71 of the lid part 72 does not coincide with the rotation axis of the scooping part 73, but is rather offset over about half the radius of the cage 72, 73.

It will be apparent that the scope of the invention as defined by the appended claims is not limited to the above stated and discussed embodiments.

## Claims

1. Scooping apparatus to be coupled with a vehicle (1), said apparatus comprising:
a carrying frame (4) to be coupled with said vehicle by means of coupling means (13),
a substantially cylindrical cage (5) rotatably carried by said frame, said cage comprising:
two end walls (6, 7) rotatably connected with said frame by means of rotation bearings (20, 27),
two cage parts (8, 10) carried by said end walls, namely a scooping part (8) having a scooping edge (9), and a lid part (10), said two cage parts being relatively movable between a closed position, in which they form the cage, and an open position and one of which has at least one opening, in such a way that that cage part is permeable to a substantial degree,
first driving means (12) for rotatably driving at least one of said cage parts;
and second driving means (16, 12) for moving the cage parts between the closed position and the open position,
the rotation axis of the lid part relative to the scooping part extending on a radial distance from the rotation axis of the cage amounting from zero to two-third of the radius of the cage,
in which said second driving means comprising first locking means (16) for locking the lid part (10) in at least one angular position relative to the frame (4) for moving the cage parts between the closed position and the open position by said first driving means (12),
characterized by
second locking means (14) for locking the two cage parts (8, 10) against relative rotation in the closed position.

2. Apparatus according to claim 1, characterized in that the two cage parts (8, 10) are movable in co-axial realtion with the cylinder axis of the cage.

3. Apparatus according to claim 1, characterized in that the second locking means (14) comprise:
a sloping cam arranged at the one cage part and a spring loaded pall (35) present at the other cage part and cooperating with said sloping cam.

4. Apparatus according to claim 1, characterized by auxiliary means arranged in the cage.

5. Apparatus according to claim 4, characterized in that a snow shovel (63) is arranged at the front of the cage.

6. Apparatus according to claim 4, characterized in that the auxiliary means comprise a brush (56) rotatably drivable by means of third driving means.

7. Apparatus according to claim 4, characterized in that the auxiliary means comprise a shaft (49) carrying extensions (50), such as blades or knives.

8. Apparatus according to claim 7, characterized in that the extensions are removable.

9. Apparatus according to claim 7, characterized in that the extensions are hingeably connected to said shaft.

10. Apparatus according to claim 7, characterized in that the shaft is rotatably drivable by means of fourth driving means.

11. Apparatus according to claim 7, characterized in that the extensions are arranged on said shaft in a helical pattern.

12. Apparatus according to claim 1, characterized in that the second driving means comprise a hydro-motor (12) which is fed from a hydraulic power source present in the vehicle through a hydraulic rotation coupling arranged in the area of one of the rotation bearings (20,27).

13. Apparatus according to claim 6, characterized in that the third driving means comprise a hydromotor which is fed from a hydraulic power source present in the vehicle through a hydraulic rotation coupling arranged in the area of one of the rotation bearings (20,27).

14. Apparatus according to claim 11, characterized in that the fourth driving means comprise a hydro-motor which is fed from a hydraulic power source present in the vehicle through a hydraulic rotation coupling arranged in the area of one of the rotation bearings (20,27).

15. Apparatus according to claim 4, characterized in that the auxiliary means comprise a sieve plate (41) fixed to a cage part provided with openings and covering said openings, said at least one sieve plate having openings which are smaller than the openings in the relates cage part.

16. Apparatus according to claim 4, characterized in that the auxiliary means comprise a closed plate fixed to a cage part provided with openings and covering said openings.

17. Vehicle (1), characterized by a scooping apparatus according to any one of the preceding daims.

18. Apparatus according to any one of the claims 1-16, characterized by a coupling plate (13), adapted and obviously intended to be used as coupling means between a vehicle and said apparatus.

## Patentansprüche

1. Schaufelvorrichtung zur Ankopplung an einem Fahrzeug (1), die folgende Teile aufweist:
einen Trägerrahmen (4), der mit dem Fahrzeug mittels einer Kupplungseinrichtung (13) kuppelbar ist,
einen im wesentlichen zylindrischen Behälter (5), der von dem Rahmen drehbar getragen wird und folgende Teile umfaßt:
zwei Stirnwände (6,7), die drehbar mit dem Rahmen über Drehlager (20,27) verbunden sind,
zwei Behälterteile (8,10), die von den Stirnwänden getragen werden, nämlich ein Schaufelteil (8) mit einer Schaufelkante (9) und ein Abdeckteil (10), wobei die beiden Behälterteile relativ zueinander zwischen einer Schließstellung, in der sie den Behälter bilden, und einer Öffnungsstellung beweglich sind und wobei einer der Teile wenigstens eine Öffnung derart aufweist, daß jener Behälterteil bis zu einem hohen Maße durchlässig ist,
erste Antriebsmittel (12), die wenigstens einen der Behälterteile rotierend antreiben;
und zweite Antriebsmittel (16,12) zur Bewegung der Behälterteile zwischen der Schließstellung und der Öffnungsstellung,
wobei sich die Drehachse des Abdeckteils relativ zu dem Schaufelteil in einem radialen Abstand von der Drehachse des Behälters mit einer radialen Versetzung zwischen Null und zwei Drittel des Behälterradius erstreckt, und
wobei die zweiten Antriebsmittel erste Verriegelungsmittel (16) aufweisen, um den Abdeckteil (10) in wenigstens einer Winkelstellung relativ zu dem Rahmen (4) festzulegen, damit die Behälterteile zwischen der Schließstellung und der Öffnungsstellung durch die ersten Antriebsmittel (12) bewegt werden können,
gekennzeichnet durch zweite Verriegelungsmittel (14), um die beiden Behälterteile (8,10) gegen Relativdrehung in der Schließstellung zu verriegeln.

2. Vorrichtung nach Anspruch 1,
dadurch gekennzeichnet, daß die beiden Behälterteile (8,10) koaxial zur Zylinderachse des Behälters beweglich sind.

3. Vorrichtung nach Anspruch 1,
dadurch gekennzeichnet, daß die zweiten Verriegelungsmittel (14) einen ansteigenden Nocken auf einem Behälterteil und einen federbelasteten Teil (35) auf dem anderen Behälterteil aufweisen, der mit dem ansteigenden Nocken zusammenwirkt.

4. Vorrichtung nach Anspruch 1,
gekennzeichnet durch Hilfsvorrichtungen im Behälter.

5. Vorrichtung nach Anspruch 4,
dadurch gekennzeichnet, daß ein Schneepflug (63) an der Vorderseite des Behälters angeordnet ist.

6. Vorrichtung nach Anspruch 4,
dadurch gekennzeichnet, daß die Hilfsvorrichtung eine Bürste (56) aufweist, die drehbar durch einen dritten Antrieb beweglich ist.

7. Vorrichtung nach Anspruch 4,
dadurch gekennzeichnet, daß die Hilfsvorrichtung eine Welle (49) aufweist, die Fortsätze (50), z.B. Schaufeln oder Messer, trägt.

8. Vorrichtung nach Anspruch 7,
dadurch gekennzeichnet, daß die Fortsätze abnehmbar sind.

9. Vorrichtung nach Anspruch 7,
dadurch gekennzeichnet, daß die Fortsätze schwenkbar mit der Welle verbunden sind.

10. Vorrichtung nach Anspruch 7,
dadurch gekennzeichnet, daß die Welle durch einen vierten Antrieb in Drehbewegungen versetzbar ist.

11. Vorrichtung nach Anspruch 7,
dadurch gekennzeichnet, daß die Fortsätze auf der Welle in einem Schraubenmuster angeordnet sind.

12. Vorrichtung nach Anspruch 1,
dadurch gekennzeichnet, daß der zweite Antrieb aus einem Hydromotor (12) besteht, der von einer Hydraulikquelle des Fahrzeugs über eine hydraulische Drehkupplung gespeist wird, die im Bereich eines der Drehlager (20,27) angeordnet ist.

13. Vorrichtung nach Anspruch 6,
dadurch gekennzeichnet, daß der dritte Antrieb aus einem Hydromotor besteht, der aus einer Hydraulikquelle im Fahrzeug über eine hydraulische Drehkupplung gespeist wird, die im Bereich eines der Drehlager (20,27) angeordnet ist.

14. Vorrichtung nach Anspruch 11,
dadurch gekennzeichnet, daß der vierte Antrieb einen Hydromotor aufweist, der von einer Hydraulikquelle des Fahrzeugs über eine hydraulische Drehkupplung gespeist wird, die im Bereich eines der Drehlager (20,27) angeordnet ist.

15. Vorrichtung nach Anspruch 4,
dadurch gekennzeichnet, daß die Hilfsvorrichtung eine Siebplatte (41) aufweist, die an einem Behälterteil festgelegt ist, der mit Öffnungen versehen ist, wobei die wenigstens eine Siebplatte die Öffnungen bedeckt und die wenigstens eine Siebplatte Öffnungen aufweist, die kleiner sind als die Öffnungen in dem betreffenden Behälterteil.

16. Vorrichtung nach Anspruch 4,
dadurch gekennzeichnet, daß die Hilfsvorrichtung aus einer Abschlußplatte besteht, die an einem mit Öffnungen versehenen Behälterteil festlegbar ist und diese Öffnungen abdeckt.

17. Fahrzeug (1),
gekennzeichnet durch eine Schaufelvorrichtung nach einem der vorhergehenden Ansprüche.

18. Vorrichtung nach einem der Ansprüche 1 - 16,
gekennzeichnet durch eine Kupplungsplatte (13), die als Kupplung zwischen einem Fahrzeug und der Vorrichtung bestimmt und als solche benutzbar ist.

## Revendications

1. Dispositif pelleteur destiné à être attelé à un véhicule (1), ledit dispositif comprenant :
- un châssis porteur (4) destiné à être attelé au véhicule par des moyens d'attelage (13) ;
- une cage (5) sensiblement cylindrique montée rotative sur ledit châssis, ladite cage comprenant :
- deux parois d'extrémité (6, 7) montées rotatives sur ledit châssis au moyen de paliers (20, 27) ;
- deux parties (8, 10) de cage portées par lesdites parois d'extrémité, à savoir une partie pelleteuse (8) ayant une arête pelleteuse (9) et une partie couvercle (10), ces deux parties de cages pouvant se déplacer l'une par rapport à l'autre entre une position fermée, dans laquelle elles forment la cage, et une position ouverte, et une de ces parties possédant au moins une ouverture, de sorte que cette partie de la cage est perméable dans une mesure notable ;
- des premiers moyens d'entraînement (12) servant à entraîner en rotation au moins une desdites parties de la cage ; et
- des deuxièmes moyens d'entraînement (16, 12) servant à déplacer les parties de la cage entre la position fermée et la position ouverte ;
- l'axe de rotation de la partie couvercle par rapport à la partie pelleteuse s'étendant sur une distance radiale, à partir de l'axe de rotation de la cage, qui varie de zéro au deux tiers du rayon de la cage ;
dans lequel les deuxièmes moyens d'entraînement comprennent des premiers moyens de verrouillage servant à verrouiller la partie couvercle (10) dans au moins une position angulaire relative par rapport au châssis (4) pour faire déplacer les parties de la cage entre la position fermée et la position ouverte par lesdits premiers moyens d'entraînement (12), caractérisé par des deuxièmes moyens de verrouillage (14) servant à verrouiller les deux parties (8, 10) de la cage pour les empêcher de tourner l'une par rapport à l'autre dans la position fermée.

2. Dispositif selon la revendication 1,
caractérisé en ce que les deux parties (8, 10) de la cage sont mobiles coaxialement à l'axe de cylindre de la cage.

3. Dispositif selon la revendication 1,
caractérisé en ce que les deuxièmes moyens de verrouillage (14) comprennent : une came en pente agencée sur une partie de la cage et un cliquet (35) chargé par ressort, présent sur l'autre partie de la cage et qui coopère avec ladite came en pente.

4. Dispositif selon la revendication 1,
caractérisé par des moyens auxiliaires agencés dans la cage.

5. Dispositif selon la revendication 4,
caractérisé en ce qu'une lame de chasse-neige (63) est agencée à l'avant de la cage.

6. Dispositif selon la revendication 4,
caractérisé en ce que les moyens auxiliaires comprennent une brosse (56) entraînée en rotation à l'aide de troisièmes moyens d'entraînement.

7. Dispositif selon la revendication 4,
caractérisé en ce que les moyens auxiliaires comprennent un arbre (49) portant des extensions (50) telles que des pales ou lames.

8. Dispositif selon la revendication 7,
caractérisé en ce que les extensions sont amovibles.

9. Dispositif selon la revendication 7,
caractérisé en ce que les extensions sont reliées audit arbre à la façon de charnières.

10. Dispositif selon la revendication 7,
caractérisé en ce que l'arbre peut être entraîné en rotation au moyen de quatrièmes moyens d'entraînement.

11. Dispositif selon la revendication 7,
caractérisé en ce que les extensions sont agencés sur ledit arbre selon un dessin hélicoïdal.

12. Dispositif selon la revendication 1,
caractérisé en ce que les deuxièmes moyens d'entraînement comprennent un moteur hydraulique (12) qui est alimenté par une source d'énergie hydraulique présente dans le véhicule, par l'intermédiaire d'un raccord hydraulique tournant agencé dans la région d'un des paliers de rotation (20, 27).

13. Dispositif selon la revendication 6,
caractérisé en ce que les troisièmes moyens d'entraînement comprennent un moteur hydraulique qui est alimenté par une source d'énergie hydraulique présente dans le véhicule par l'intermédiaire d'un raccord hydraulique tournant agencé dans la région d'un des paliers de rotation (20, 27).

14. Dispositif selon la revendication 11,
caractérisé en ce que les quatrièmes moyens d'entraînement comprennent un moteur hydraulique qui est alimenté par une source d'énergie hydraulique présente dans le véhicule par l'intermédiaire d'un raccord hydraulique tournant agencé dans la région d'un des paliers de rotation (20, 27).

15. Dispositif selon la revendication 4,
caractérisé en ce que les moyens auxiliaires comprennent une plaque de crible (41) fixée à une partie de la cage munie d'ouverture, et qui recouvre lesdites ouvertures, ladite au moins une plaque de crible ayant des ouvertures qui sont plus petites que les ouvertures de la partie correspondante de la cage.

16. Dispositif selon la revendication 4,
caractérisé en ce que les moyens auxiliaires comprennent une plaque pleine fixée à une partie de la cage munie d'ouvertures et qui recouvre lesdites ouvertures.

17. Véhicule (1), caractérisé par un dispositif pelleteur selon une quelconque des revendications précédentes.

18. Dispositif selon une quelconque des revendication 1 à 16, caractérisé par une plaque d'attelage (13) adaptée et évidement destinée à être utilisée comme moyen d'attelage entre un véhicule et ledit dispositif.
